Europäisches Patentamt

**European Patent Office**

**Office européen des brevets**

(19)

(11) Veröffentlichungsnummer: **0 028 673**
**B1**

(12) **EUROPÄISCHE PATENTSCHRIFT**

(45) Veröffentlichungstag der Patentschrift:
**10.10.84**

(21) Anmeldenummer: **80104083.3**

(22) Anmeldetag: **15.07.80**

(51) Int. Cl.³: **A 01 B 75/00**, A 01 C 11/00,
A 01 D 45/00

(54) **Gerät zum Setzen, Jäten und Pflücken von Pflanzen, insbesondere Erdbeeren, Chinakohl und Johannisbeeren.**

(30) Priorität: **17.07.79 AT 4930/79**

(43) Veröffentlichungstag der Anmeldung:
**20.05.81 Patentblatt 81/20**

(45) Bekanntmachung des Hinweises auf die Patenterteilung:
**10.10.84 Patentblatt 84/41**

(84) Benannte Vertragsstaaten:
**BE CH DE FR IT LI NL**

(56) Entgegenhaltungen:
**CH - A - 595 741**
**DE - A - 2 028 930**
**DE - A - 2 738 788**
**FR - A - 1 452 847**
**US - A - 2 583 358**
**US - A - 3 172 679**
**US - A - 3 199 687**
**US - A - 3 203 503**

(73) Patentinhaber: **Eder, Karl, Riegl 61. I.V., A-8171 St. Kathrein am Offenegg. (AT)**

(72) Erfinder: **Eder, Karl, Riegl 61. I.V., A-8171 St. Kathrein am Offenegg. (AT)**

BUNDESDRUCKEREI BERLIN

## Beschreibung

Gegenstand dieser Erfindung ist ein Gerät zum Pflanzen setzen, Jäten und Pflücken von Früchten, insbesondere Erdbeeren, Chinakohl und Johannisbeeren, die in Reihen mit einem Abstand von 65 bis 120 cm gepflanzt sind und aus einem dreiecksförmigen Rahmen mit drei breiten luftbereiften Rädern, einem schwenkbaren Schalensitz und einer hinteren und vorderen Plattform besteht.

Solche Geräte sind bereits bekanntgeworden. So beschreibt z. B. die DE-A-2 028 930 eine Pflanzensetzmaschine, welche aus einem rechteckigen Rahmen besteht, wo die verschiedenen Arbeitswerkzeuge wie Spurlockerer, Doppelpflugschar und Stützräder nach unterstehend angebracht sind. Weiters ist die Sitzschale nur in der Längsrichtung des Rahmens verstellbar, und das Seitlichschwenken ist nur mit dem gesamten Rahmen möglich. Das heißt, der Sitz ist in der Längsrichtung nur in bezug auf die Körpergröße verstellbar. Weiters ist eine Plattform für das Pflanzengut fix montiert.

Die FR-A-1 452 847 beschreibt ein Gerät, welches aus zwei Halbrahmen besteht, die gegeneinander verschiebbar sind, und einen Korb und Sattel zur Stützung des Brustkorbes aufweist.

In der US-A-2 583 358 wird ein Gartengerät beschrieben, bei welchem der Sitz nur höhenverstellbar ist.

Der Nachteil dieser Geräte ist die komplizierte Bauart wobei die Arbeit am Bauchliegend und in Bückstellung durchgeführt werden muß. Eine solche Körperhaltung ist nicht bequem und bei Hanglagen nicht geeignet. Alle diese Nachteile werden durch die kennzeichnenden Merkmale des Anspruchs 1 gelöst.

Durch den speziell geformten Schalensitz ist ein Rückwärts- und Seitlichschwenken möglich.

Vorzugsweise ist mit einem Bolzen das Rückwärtsschwenken in drei Neigungen möglich.

Durch das Rückwärtsschwenken des Sitzes erreicht man, daß man sich dem Gelände bei senkrechter Fahrt anpassen kann und dadurch bleibt die Körperhaltung immer in idealer Sitzposition, ca. 15 Grad von der senkrechten Linie nach hinten geneigt. Der Körper liegt bei dieser Neigung vom Gesäß bis zu den Schulterblättern ideal am Schalensitz an, dadurch wird die Wirbelsäule und der ganze Körper vollständig entlastet, und es treten keine Ermüdungserscheinungen bei dieser Arbeit auf.

Durch das Seitlichschwenken wird folgendes erreicht. Der Körper schwenkt mit der Sitzschale links oder rechts aus, dadurch wird das Gesäß nicht einseitig belastet und die Frucht wird leichter erreicht, die Reichweite der Arme wird vergrößert. Das Seitlichschwenken ist mittels zwei Verstellschrauben regulierbar.

Das Rückwärtsschwenken und Seitlichschwenken ist durch den Schwenkmechanismus möglich.

Der Schwenkmechanismus ist vorzugsweise mit zwei Zugfedern ausgestattet die das Zurückschwenken erleichtern.

Das Pflückgut wird in einem vorne zwischen den Beinen liegender einseitig höhenverstellbarer Plattform, wo ein Europlateau Platz hat, gelagert.

Die Anordnung der vorderen Plattform ist so gewählt, daß sie mit den Händen leicht erreicht wird, und dadurch kann das Pflückgut während des Schwenkens auf die andere Seite in das Plateau gelegt werden.

Hinter dem Sitz ist eine fix montierte Plattform angeschlossen, die zuerst zur Mitnahme der Leerplateaus dient, die später gegen ein vorne vollgepflücktes Plateau ausgetauscht werden kann.

Das Auswechseln der Plateaus kann in Sitzstellung erfolgen, dadurch muß das Pflücken nur kurz unterbrochen werden. Dies ergibt wiederum den Vorteil, daß alle Plateaus mittransportiert werden und das Austragen durch eine zweite Person erspart bleibt.

Die beiden Plattformen sind beim Jäten der Pflanze nicht erforderlich und können mittels Bolzen abmontiert werden, hingegen ist beim Pflanzen setzen nur der vordere Plateaurahmen in Verwendung.

Das Gerät ist mit einer leicht bedienbaren Handbremse ausgerüstet, die bei starker Hangneigung zur Entlastung der Beine beiträgt.

Zwischen dem Schalensitz und der vorderen Plattform ist eine Halterung für einen plastikbeschichteten Sonnenschirm angebracht, der ein ideales Pflücken bei Regenwetter und Sonnenschein bestens ermöglicht. Die zur Höhenverstellung des vorderen Plateaurahmens dienende Schiene ist mit einem Griff ausgestattet, der zur in Arbeitsstellungbringen des Gerätes dient.

An der vorderen Seite des vorderen Plateaurahmen sind seitlich zwei rechteckige Halterungen angebracht, die für die Mitnahme der Erdbeerbecher dienen.

Durch die Wahl der drei Räder ist kein Gelenkmechanismus notwendig der zur Anpassung von Unebenheiten für vier Räder erforderlich wäre.

Die Breite der Räder ist so gewählt, daß ein ideales Arbeiten an der Pflanze auch bei weichen Bodenverhältnissen bestens möglich ist.

Die Erfindung wird in der Beschreibung und der Zeichnung in einem Ausführungsbeispiel dargestellt. Dabei zeigt

Fig. 1 die schematische Seitenansicht des Erfindungsgegenstandes,

Fig. 2 in Draufsicht den dreiecksförmigen Grundrahmen,

Fig. 3 den Schwenkmechanismus von vorne aus gesehen.

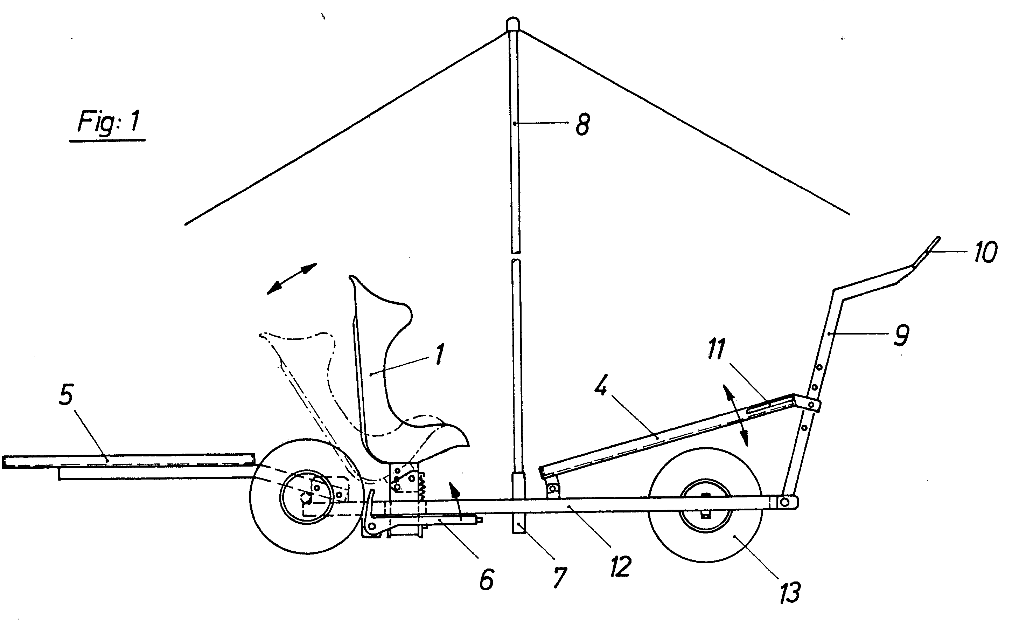

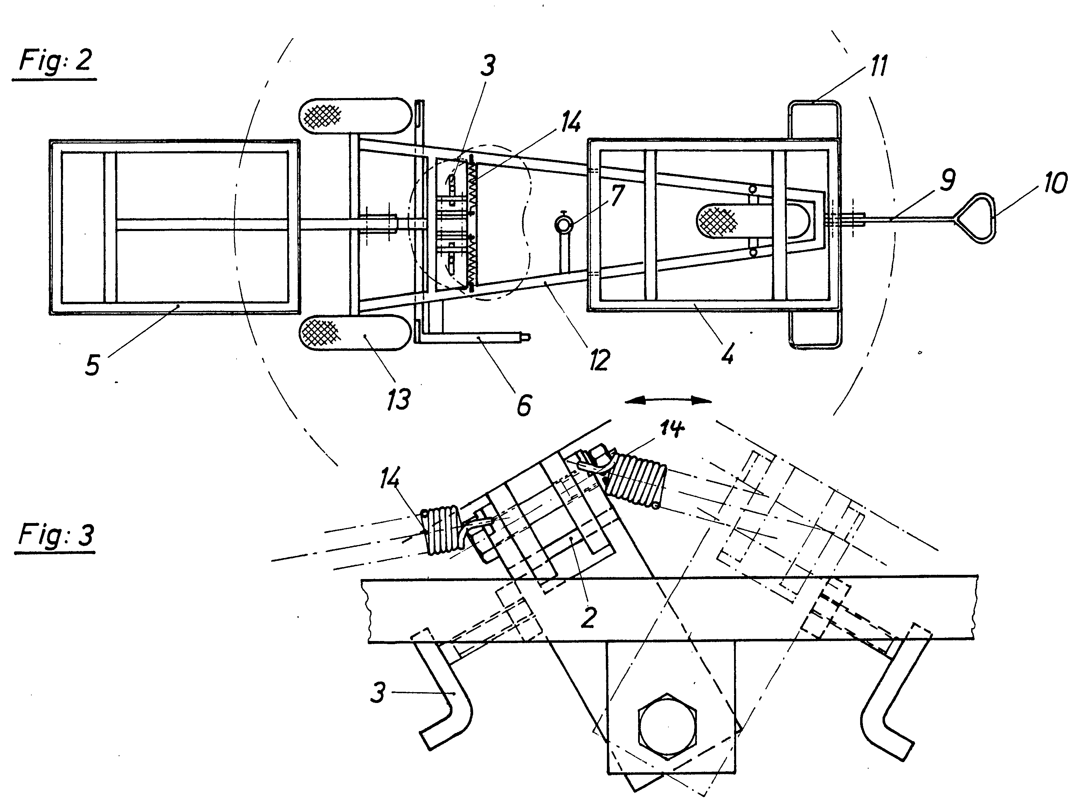

Wie die Fig. 1 und 2 zeigen, sind alle Geräteteile auf dem dreiecksförmigen Grundrahmen 12 angebaut bzw. aufgebaut.

Der dreiecksförmige Grundrahmen 12, mit der Anordnung von drei Rädern 13, hat den Vorteil, daß für die Anpassung an das Gelände, keine schwenkbare Vorderachse, erforderlich ist.

Die Breite der Räder 13 ist so gewählt, daß der Einsatz bei weichem offenen Boden auch bestens möglich ist. Diese Bodenverhältnisse findet man speziell bei Erdbeeren und Gemüsekulturen vor.

Auf die breiten Hinterräder wirkt eine leicht bedienbare Handbremse 6, die bei Hanglagen zur Entlastung der Beine beiträgt.

Sonst müßte das Gewicht des Gerätes und der gepflückten Früchte von den Beinen abgestützt werden. Dies würde zur Ermüdungserscheinung führen und die Leistung der arbeitenden Person vermindern.

Die Beine werden zur Fortbewegung benötigt, dadurch ist auch kein Motor erforderlich.

Das Kernstück dieser Erfindung ist der nach rückwärts verstellbare und seitlich schwenkbare Schalensitz 1.

Die Ausführung des Sitzes ist der natürlichen Körperform, die sich beim tiefen Sitzen in Bodennähe ergibt, entnommen.

Der Werkstoff des Schalensitzes 1, ist Polyester, der bei niedriger Temperatur eine behagliche Wärme ausstrahlt, und bei höheren Temperaturen sich nicht erhitzt.

Der Schalensitz 1 ist nach rückwärts in der Neigung mittels Bolzen 2 verstellbar. Eine Neigung von ca. 15 Grad von der senkrechten Linie, ist beim Arbeiten ideal, hierbei liegt der Körper, speziell der Rücken, vom Gesäß bis unter die Schulterblätter optimal im Schalensitz an, und die Belastung der Wirbelsäule ist auf ein Minimum reduziert.

Das Seitlichschwenken ist durch den Schwenkmechanismus Fig. 3, dargestellt.

Das Seitlichschwenken geschieht in der Form, daß der Körper samt Sitz seitlich ausschwenkt. Dadurch wird das Gesäß nicht einseitig belastet, was jedoch bei einem fix montierten Sitz eintreffen würde.

Durch das Seitlichschwenken wird außerdem die Reichweite der Arme verlängert und Frucht und Pflanze werden leichter erreicht.

Somit braucht die entspannende Sitzform nicht verändert werden.

Je nach Reihenweite ist das Seitlichschwenken mittels Verstellschrauben 3 einstellbar. Beim Hineindrehen der Verstellschrauben 3 wird das Seitlichschwenken und somit die Reichweite der Arme verkürzt. Durch das Herausdrehen wird das Seitlichschwenken und die Reichweite der Arme hingegen verlängert.

Durch das Einstellen des Seitlichschwenkens paßt man sich der Reihenweite an. Beim Seitlichschwenken wird das Zurückschwenken, bzw. auf die andere Seite schwenken, durch die Zugfedern 14 erleichtert. Die Plattformen 4 und 5, die zur Aufnahme des Pflückgutes dienen, sind in Reichweite der Arme angeordnet. Die Plattform 5 ist hinter dem Schalensitz angeordnet, und ist leicht abnehmbar.

Hingegen ist die vordere Plattform 4 lagemäßig zum Schalensitz hin leicht geneigt, das bringt den Vorteil, daß die Vorderseite des Plateaus sowie die Halterung der Erdbeerbecher leichter erreicht wird.

Die vordere Plattform 4 ist auf der Vorderseite höhenverstellbar, dadurch kann die Neigung bei Hanglagen hochgestellt werden.

Die zur Höhenverstellung der vorderen Plattform erforderliche Schiene 9 ist mit einem Griff 10 versehen, der zur in Arbeitsstellungbringen des Gerätes dient.

Die Erfindung ist auch mit einer Halterung 7 versehen, die zur Befestigung eines plastikbeschichteten Schutzschirmes 8 dient.

Durch den großen Überdachungsbereich, gibt der Schirm 8 besten Schutz bei Regenwetter und Sonnenschein.

Durch das geringe Gewicht und die unkomplizierte Bauart, ist eine bequeme Handhabung für jede Person leicht erlernbar.

Für die Arbeit an bodennahen Kulturen ist dieses Gerät nach meiner Ansicht ein Gesundheitsgerät. Die sonst so stark bei dieser Arbeit beanspruchte Wirbelsäule, wird zu 100% entlastet, dadurch ist auch eine höhere Arbeitsleistung den ganzen Tag über möglich.

Außerdem ist diese Erfindung in jeder bodennahen Kultur, wo eine Fahrgasse von mindestens 60 cm freibleibt, einsetzbar.

Der Einsatz des Gerätes ist nachfolgend kurz beschrieben.

Durch den Griff 10 wird das Gerät in die Fahrgasse gestellt.

Danach wird die Neigung des Schalensitzes nach hinten, die Weite des Seitlichschwenkens und die Höhe der vorderen Plattform 4 und bei Hangneigung, die Handbremse 6, eingestellt.

Je nach Reihenlänge wird eine bestimmte Anzahl von Plateaus in der Plattform 5, mittransportiert. Die Erdbeerbecher werden aus der Halterung 11 entnommen und in das Plateau 4 eingereiht.

Es wird einmal links und einmal rechts an der Pflanze gearbeitet, die Beine dienen bei flachem Gelände zur Fortbewegung, und bei steilem Gelände zur Stützung des Gerätes.

Gleichzeitig wird während des Schwenkens auf die andere Seite, das Pflückgut in das vordere Plateau 4 gelegt. Durch das abwechselnde Seitlichschwenken wird der Körper nie einseitig belastet.

Das vollgepflückte Plateau aus der vorderen Plattform 4 wird gegen ein leeres aus der hinteren Plattform 5 ausgetauscht. Da dieses Austauschen der Plateaus im Sitzen erfolgen kann, muß das Pflücken nur kurz unterbrochen werden.

Durch diese Zuordnung der Geräteteile zum Schalensitz, ist eine hohe Arbeitsleistung mit geringster Körperbeanspruchung möglich.

**Patentansprüche**

1. Gerät zum Setzen, Jäten und Pflücken von Pflanzen, insbesondere Erdbeeren, Chinakohl und Johannisbeeren, die in Reihen mit einem Abstand von 65 bis 120 cm gepflanzt sind, wobei das Gerät einen Grundrahmen (12) mit vorne und hinten an diesem angeordneten breiten luftbereiften Rädern (13), einen zwischen Vorder- und Hinterrädern (13) im Grundrahmen (12) angeordneten Schalensitz (1) und zwei Plattformen (4, 5) aufweist, dadurch gekennzeichnet, daß am spitzen Ende des dreieckigen Grundrahmens (12) ein Rad (13) und am gegenüberliegenden Ende des dreieckigen Grundrahmens (12) zwei Räder (13) angeordnet sind, daß der Schalensitz (1) nach rückwärts in der Neigung verstellbar und nach beiden Seiten schwenkbar ist, daß die eine Plattform (4) vor und die zweite Plattform (5) hinter dem Schalensitz (1) angeordnet ist, wobei die vordere Plattform (4) einseitig höhenverstellbar ist, und daß das Gerät ferner an sich bekannte Zusätze, wie eine Halterung für einen Schutzschirm (7), Halterungen für Pflückbecher (11), sowie eine Handbremse (6) für die Hinterräder aufweist.

2. Gerät nach Anspruch 1, dadurch gekennzeichnet, daß der Schalensitz (1) nach rückwärts mittels Bolzen (2) in drei Stellungen fixierbar ist.

3. Gerät nach einem der Ansprüche 1 und 2, dadurch gekennzeichnet, daß das Seitlichschwenken des Schalensitzes (1) durch zwei Verstellschrauben (3) regulierbar ist.

4. Gerät nach einem der Ansprüche 1 und 3, dadurch gekennzeichnet, daß für den Schwenkmechanismus des Schalensitzes zwei Rückzugfedern (14) angeordnet sind.

5. Gerät nach Anspruch 1, dadurch gekennzeichnet, daß zur Höhenverstellung der vorderen Plattform (4) eine Schiene (9) angebracht ist, die mit einem Griff (10) versehen ist.

## Claims

1. A machine for planting, weeding and picking plants — especially strawberries, cabbage and red currants which are planted in rows and spaced between cm 65 and 120. The machine shows a basic frame (12) with broad pneumatic tyres (13) which are set before and behind the frame and the seat formed like a shell (1) which is set between front and back wheels in the frame and two platforms (4, 5). One wheel (13) is grouped at the peaked end of the triangular basic frame (12), the other two wheels (13) are grouped opposite of it, the seat can be shifted backwards and is rotatable to both sides, one platform (4) is grouped in front of and the second one (5) behind the seat the front platform's (4) height can be shifted on one side. Besides the machine shows potentially well known additions as the holding device for a protective shield (7), devices for picking cups (11) and a handbrake (6) for the back wheels.

2. Device according to revendication 1, with the characteristic that the seat (1) can be fixed backwards in three positions by means of a bolt (2).

3. Device according to revendication 1 and 2, with the characteristic that the movement sidewards of the seat (1) is adjustable by two adjustment screws (3).

4. Device according to revendications 1 and 3, with the characteristic that there are mounted two return-springs (14) for the pivoting mechanism of the seat.

5. Device according to revendication 1, with the characteristic that for the height regulation of the front platform (4) is mounted a bar (9) with a grip (10).

## Revendications

1. Appareil pour planter, sarcler et cueillir des plantes, en particulier des fraises, des endives et des groseilles qui sont plantées en rangs avec une distance de 65 à 120 cm. L'appareil consiste d'un chassis (12) avec à l'avant et à l'arrière des pneus larges (13), un siège à coquille (1) sur le chassis (12) entre les pneus d'avant et d'arrière (13) et deux plate-formes (4, 5); caractérisé qu'à la pointe du chassis en triangle (12) se trouve un pneu (13) et à l'autre bout du chassis en triangle (12) se trouvent deux pneus (13); que l'inclinaison du siège (1) est règlable vers l'arrière et que le siège peut basculer vers les deux côtés; qu'une des plate-formes (4) est montée devant et l'autre (5) derrière le siège — une plate-forme (4) est sur un côté réglable en hauteur —; et que l'appareil a des suppléments connus comme un support pour un parapluie/parasol (7), des supports pour des récipients (11) pour les fruits ainsi qu'un frein-à-main (6) agissant sur les pneus arrière.

2. Appareil selon revendication 1, caractérisé que le siège (1) peut être fixé par un boulon en trois positions vers l'arrière.

3. Appareil selon une des revendications 1 et 2, caractérisé que le basculement vers les côtés du siège (1) est réglable par deux vis (3).

4. Appareil selon une des revendications 1 et 3, caractérisé que pour le mécanisme de basculement du siège sont montés deux ressorts (14).

5. Appareil selon revendication 1 caractérisé que pour le réglage en hauteur de la plate-forme avant (4) est monté une barre (9) avec une poignée (10).

Fig: 1

0 028 673

Fig: 2

Fig: 3